# FASCICULE DE BREVET EUROPEEN

(11) **EP 3 472 439 B1**
(45) Date de publication et mention de la délivrance du brevet: **10.08.2022**
(21) Numéro de dépôt: 17729508.6
(22) Date de dépôt: 15.06.2017
(51) Int. Cl.: F01K 23/06, F01K 13/00, F16T 1/12

(54) **PROCÉDÉ DE DÉTECTION ET D'EXTRACTION DE FLUIDE GAZEUX CONTENU DANS UN CIRCUIT FERMÉ FONCTIONNANT SELON UN CYCLE DE RANKINE ET DISPOSITIF UTILISANT UN TEL PROCÉDÉ**
VERFAHREN ZUR DETEKTION UND EXTRAKTION EINES GASFÖRMIGEM FLUIDS, DAS IN EINEM GEMÄSS EINES RANKINE-ZYKLUS FUNKTIONIERENDEN GESCHLOSSENEN KREISLAUF ENTHALTEN IST, UND VORRICHTUNG ZUR VERWENDUNG SOLCH EINES VERFAHRENS
METHOD FOR DETECTING AND EXTRACTING GASEOUS FLUID CONTAINED IN A CLOSED CIRCUIT FUNCTIONING ACCORDING TO A RANKINE CYCLE AND DEVICE USING SUCH A METHOD

(30) Priorité: 20.06.2016 FR 1655689
(43) Date de publication de la demande: 24.04.2019
(73) Titulaire: IFP Energies nouvelles, 92852 Rueil-Malmaison Cedex (FR); Enogia, 13015 Marseille (FR)
(72) Inventeur: SERRANO, David, 69003 Lyon (FR); TERVER, Jocelyn, 69590 St Symphorien Sur Coise (FR); PAUCHER, Antonin, 13006 Marseille (FR); LEROUX, Arthur, 13001 Marseille (FR)
(74) Mandataire: IFP Energies nouvelles
(86) Numéro de dépôt international: PCT/EP2017/064718
(87) Numéro de publication internationale: WO 2017/220434

(56) Documents cités:
- DE-A1-102010 054 963
- US-A1- 2010 294 377
- US-A1- 2015 013 338
- US-A1- 2015 013 935

## Description

La présente invention se rapporte à un procédé de détection et d'extraction de fluide gazeux contenu dans un circuit fermé fonctionnant selon un cycle de Rankine et à un circuit fermé utilisant un tel procédé.

Comme cela est largement connu, le cycle de Rankine est un cycle thermodynamique par lequel de la chaleur provenant d'une source de chaleur externe est transmise à un circuit fermé qui contient un fluide de travail.

Ce cycle se décompose généralement en une étape durant laquelle le fluide de travail à bas point de congélation est comprimé de manière isentropique, suivie d'une étape où ce fluide comprimé est chauffé et vaporisé au contact d'une source de chaleur. Cette vapeur est ensuite détendue, au cours d'une autre étape, de manière isentropique dans une machine de détente, puis, dans une dernière étape, cette vapeur détendue est refroidie et condensée au contact d'une source froide.

Pour réaliser ces différentes étapes, le circuit comprend une pompe pour comprimer le fluide de travail sous forme liquide et le faire circuler dans le circuit, un échangeur de chaleur (ou évaporateur) qui est balayé par un fluide chaud pour réaliser la vaporisation au moins partielle du fluide comprimé, une machine de détente pour détendre la vapeur, telle qu'une turbine, qui transforme l'énergie de cette vapeur en une autre énergie, comme une énergie électrique en y accouplant une génératrice électrique pour former une turbogénératrice, et un autre échangeur de chaleur (ou condenseur) grâce auquel la chaleur contenue dans la vapeur est cédée à une source froide, généralement un fluide de refroidissement ou de l'air extérieur qui balaye ce condenseur, pour transformer cette vapeur en un liquide.

Il est également connu, notamment par le document FR 2 884 555, d'utiliser l'énergie calorifique véhiculée par les gaz d'échappement d'un moteur à combustion interne, en particulier celui utilisé pour des véhicules automobiles, comme source chaude pour assurer le chauffage et la vaporisation du fluide traversant l'évaporateur.

Ceci permet d'améliorer l'efficacité énergétique de ce moteur en récupérant une grande partie de l'énergie perdue à l'échappement pour la transformer en une énergie qui peut être utilisée pour le véhicule automobile au travers du circuit à cycle de Rankine.

Comme cela est largement connu, un fluide sous forme gazeuse peut être présent dans ce circuit, ce qui a pour inconvénient majeur de diminuer les performances du fluide de travail et de dégrader fortement le rendement global de ce cycle de Rankine.

Par fluide sous forme gazeuse, il est entendu un fluide différent du fluide de travail et qui peut être de l'air ou tout autre fluide gazeux issu de la décomposition ou de la dégradation du fluide de travail.

Pour des raisons de simplification dans la suite de la description, le fluide gazeux considéré est de l'air.

Cet air peut résulter d'une purge imparfaite du circuit lors de son remplissage en fluide de travail, ou provenir du fluide de travail qui peut désorber l'air qu'il contient lors du fonctionnement du circuit, ou de fuites d'air vers l'intérieur du circuit, notamment aux jonctions entre les différents éléments du circuit, en particulier lorsque le circuit est à l'arrêt.

Les documents US2015/013935 A1, US2010/294377 A1 et US2015/013338 A1 décrivent d'autres dispositifs de l'art de la technique.

Il est connu, notamment par le document US20140099184 de détecter la présence d'air dans le circuit fermé puis de diriger cet air vers la machine de détente pour qu'il y soit confiné.

Un tel fonctionnement a pour inconvénient majeur de compliquer le circuit fermé pour assurer le guidage de l'air vers la machine de détente.

La présente invention se propose de remédier aux inconvénients précités grâce à un procédé et à un dispositif simple et peu couteux pour faire fonctionner à tout moment un circuit fermé à cycle de Rankine qui soit dépourvu d'air.

A cet effet, l'invention concerne un procédé de détection et d'extraction de fluide gazeux contenu dans un circuit fermé fonctionnant selon un cycle de Rankine avec les caractéristiques de la revendication 1.

Le circuit peut être au repos lorsqu'aucune circulation de fluide de travail ne se produit au niveau de l'équipement d'extraction et que la température mesurée correspond sensiblement à la température ambiante.

On peut mesurer la température et la pression du fluide de travail en un point bas en altitude du circuit.

On peut activer l'équipement d'extraction de fluide gazeux placé sur un point haut du circuit.

On peut activer l'équipement d'extraction en actionnant une pompe à extraction de fluide gazeux et en contrôlant l'ouverture d'une vanne contrôlant la circulation du fluide gazeux dans une conduite reliant la pompe au circuit.

On peut extraire un fluide gazeux comprenant soit de l'air, soit tout autre fluide gazeux issu de la décomposition ou de la dégradation du fluide de travail utilisé dans ledit circuit à cycle de Rankine.

On peut diriger le fluide gazeux extrait vers l'extérieur du circuit.

L'invention concerne également un circuit fermé fonctionnant selon un cycle de Rankine avec les caractéristiques de la revendication 8.

La table de calcul peut comprendre tout ou partie d'un diagramme de Mollier. L'équipement d'extraction du fluide gazeux peut comprendre une pompe à extraction de fluide gazeux reliée au circuit.

L'équipement peut comprendre une conduite de fluide gazeux reliant le circuit à la pompe d'extraction de fluide gazeux.

L'équipement peut comprendre une vanne commandée permettant de contrôler la circulation du fluide gazeux dans la conduite de fluide gazeux.

L'équipement peut comprendre une conduite d'évacuation vers l'extérieur du fluide gazeux.

Le fluide gazeux peut comprendre soit de l'air, soit tout autre fluide gazeux issu de la décomposition ou de la dégradation du fluide de travail utilisé dans ledit circuit à cycle de Rankine.

Les autres caractéristiques et avantages de l'invention vont apparaître à la lecture de la description qui va suivre, donnée à titre uniquement illustratif et non limitatif, et à laquelle sont annexés :
- la figure 1 qui illustre un circuit fermé fonctionnant selon un cycle de Rankine avec le procédé et le dispositif selon l'invention et
- la figure 2 qui montre un diagramme de Mollier traçant la pression en fonction de l'enthalpie massique et qui est utilisé pour le procédé selon l'invention.

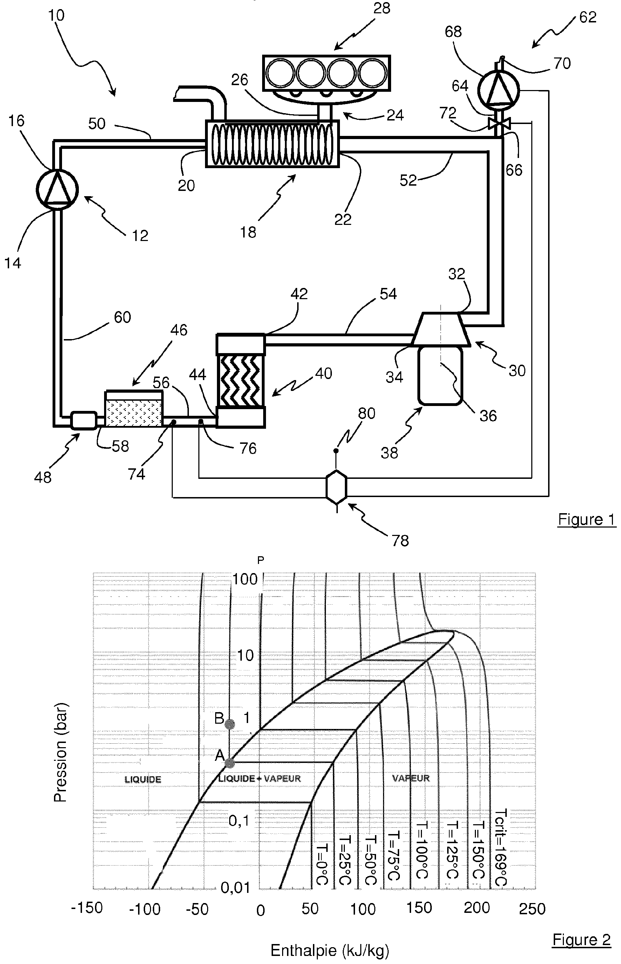

La figure 1 illustre un circuit fermé à cycle de Rankine 10 qui est avantageusement de type ORC (Organic Rankine Cycle) et qui utilise un fluide organique ou des mélanges de fluides organiques, comme du butane, de l'éthanol, des hydrofluorocarbures, du dioxyde de carbone...

Il est bien entendu que le circuit fermé peut fonctionner avec un fluide non organique comme de l'ammoniac ou de l'eau.

Ce circuit comprend une pompe de circulation et de compression 12 du fluide de travail, dénommée pompe de circulation dans la suite de la description, avec une entrée 14 du fluide de travail sous forme liquide et une sortie 16 de ce fluide de travail également sous forme liquide mais comprimé sous une pression élevée. Cette pompe est avantageusement entraînée en rotation par tous moyens; comme un moteur électrique (non représenté).

Ce circuit comporte aussi un échangeur de chaleur 18, dénommé évaporateur, traversé par le fluide de travail comprimé entre une entrée 20 de ce fluide liquide et une sortie 22 au travers de laquelle le fluide de travail ressort de cet évaporateur sous forme de vapeur comprimée. Cet évaporateur est parcouru par une source chaude 24 sous forme liquide ou gazeuse.

Cette source chaude peut provenir des gaz d'échappement circulant dans la ligne d'échappement 26 d'un moteur à combustion interne 28, du fluide de refroidissement d'un moteur à combustion interne, du fluide de refroidissement d'un four industriel, ou du fluide caloporteur chauffé dans des installations thermiques ou par un brûleur.

Ce circuit comporte également une machine de détente 30 recevant par son entrée 32 le fluide de travail sous forme de vapeur comprimée à haute pression, ce fluide ressortant par la sortie 34 de cette machine sous forme de vapeur détendue à basse pression.

Avantageusement, cette machine de détente est sous la forme d'une turbine de détente dont l'arbre du rotor est entraîné en rotation par le fluide de travail sous forme de vapeur en commandant en rotation un arbre de liaison 36 (illustré en traits pointillés). De manière préférentielle, cet arbre permet de transmettre l'énergie récupérée du fluide de travail à tout dispositif transformateur, comme par exemple une génératrice électrique 38.

Le circuit comporte encore un échangeur de refroidissement 40, ou condenseur, avec une entrée 42 pour la vapeur basse pression détendue et une sortie 44 pour le fluide de travail basse pression transformé sous forme liquide après son passage dans ce condenseur. Ce condenseur est balayé par une source froide, généralement un flux d'eau froide usuellement à température ambiante, de manière à refroidir la vapeur détendue pour qu'elle se condense et se transforme en un liquide. Bien entendu, toute autre source froide de refroidissement, comme un autre liquide de refroidissement ou de l'air froid, peut être utilisée pour assurer la condensation de la vapeur.

Ce circuit comporte également, entre le condenseur et la pompe de circulation, un réservoir fermé 46 qui permet de conserver le fluide de travail à l'état liquide et, de manière préférentielle, un filtre 48, comme un filtre à cartouche, pour filtrer le fluide de travail sortant du réservoir avant son introduction dans la pompe.

Les différents éléments du circuit sont reliés entre eux par des conduites de circulation de fluide 50, 52, 54, 56, 58, 60 permettant de relier successivement la pompe avec l'évaporateur (conduite d'évaporateur 50), l'évaporateur avec la turbine (conduite de turbine 52), cette turbine avec le condenseur (conduite de condenseur 54), le condenseur avec le réservoir (conduite de réservoir 56), le réservoir au filtre (conduite de filtre 58) et le filtre à la pompe (conduite de pompe 60) pour que le fluide de travail circule selon un sens horaire.

Comme cela est montré sur la figure 1, le circuit comporte en outre un équipement d'extraction de fluide gazeux 62, ici de l'air, qui est placé sur le point le plus haut du circuit, c'est-à-dire sur un point du circuit où l'air s'accumule.

Cet équipement d'extraction comprend une conduite d'air 64 qui prend naissance à un raccordement 66 avec le point le plus haut du circuit, ici sur l'une des conduites les plus hautes placées sur le circuit comme représenté à la figure 1, tel que la conduite 52. Cette conduite d'air aboutit à un moyen d'extraction d'air, ici une pompe 68 dénommée pompe à extraction d'air, qui porte une conduite d'évacuation 70 de l'air extrait vers l'extérieur du circuit ou vers un réservoir tampon (non représenté). La conduite d'air porte une vanne 72, avantageusement une vanne commandée, entre la pompe à air et le raccordement permettant de contrôler la circulation de l'air dans la conduite d'air.

Le circuit comprend un capteur de pression 74 et un capteur de température 76, qui sont préférentiellement placés sur le point le plus bas du circuit, c'est-à-dire sur l'une des conduites les plus basses en altitude en considérant le circuit comme représenté à la figure 1. Ces capteurs sont de préférence localisés dans la zone de basse pression du circuit entre la sortie de la turbine et l'entrée de la pompe de circulation.

Avantageusement et à titre d'exemple, ces capteurs sont placés sur la conduite 56 en sortie du condenseur 40. Le capteur de pression 74 permet ainsi de connaitre la pression qui règne dans la partie du circuit qui est à une basse pression alors que le capteur de température permet d'être renseigné sur la température du fluide de travail qui sort du condenseur et qui est basiquement la température la plus basse du fluide circulant dans le circuit.

Bien entendu, il est prévu une unité de contrôle 78 de type calculateur qui pilote les différents actuateurs du circuit, comme la vanne ou la pompe à air, et qui reçoit les mesures des différents capteurs, tels que le capteur de pression 74 et le capteur de température 76.

Ce calculateur contient également des tables de calcul avec notamment l'équation de la courbe de liquide saturé P_{liquide saturé}=f(T) qui permet de connaitre la valeur théorique de la pression de liquide P_{liquide saturé} en fonction de la température mesurée T_{réelle}.

Plus particulièrement cette courbe est issue du diagramme de Mollier (voir figure 2) qui prend en considération la pression (P en bar) du fluide de travail en fonction de l'enthalpie massique (en kJ/kg) de ce fluide.

Avantageusement, cette courbe peut correspondre à une partie du diagramme de Mollier. En effet, la connaissance de la courbe de la pression de liquide saturé en fonction de la température est suffisante.

L'ensemble ainsi formé par l'équipement d'extraction d'air, les capteurs et le calculateur constitue un dispositif de détection et d'extraction de fluide gazeux utilisé pour un circuit fermé.

Le procédé appliqué à ce circuit consiste à détecter la présence d'un fluide gazeux, ici de l'air, dans le circuit au repos et d'extraire cet air hors de ce circuit.

Pour détecter la présence de l'air, le procédé consiste à mesurer les conditions thermodynamiques de pression P_{réelle} et de température T_{réelle} du fluide à l'aide du capteur de pression et du capteur de température dans le circuit lorsque ce circuit est au repos et que le fluide de travail est froid, par exemple avant un redémarrage du circuit.

Le circuit fermé est considéré comme au repos lorsqu'aucune circulation de fluide de travail ne se produit au niveau de l'équipement d'extraction 62 et lorsque le fluide de travail est froid, c'est-à-dire que la température T_{réelle} du fluide est à la température ambiante T ou proche celle-ci (à ±5°C).

Une fois ces conditions atteintes, on compare alors les deux valeurs P_{réelle} et P_{liquide saturé} à partir du diagramme de Mollier en fonction de la température ambiante T.

Ainsi, à titre d'exemple pour une température ambiante T de 25°C:
- Si P_{réelle} est égale à la valeur seuil P_{liquide saturé} ou proche de cette pression (à ±3%) (point A) le circuit n'a pas d'air présent et aucune autre opération n'est requise.
- Si P_{réelle} est supérieure à la valeur seuil P_{liquide saturé} (point B), comme indiqué sur la figure 2, le circuit contient de l'air qui s'est accumulé dans sa partie haute, cet air peu dense se localise naturellement dans les volumes d'altitude maximale, ici la conduite 52, et une action corrective doit être réalisée.

L'action corrective consiste à extraire l'air contenu dans le circuit en rendant opérationnel l'équipement d'extraction 62 qui est placé en un point haut du circuit.

La pompe à extraction d'air 68 est alors activée puis la vanne 72 est commandée en ouverture pour laisser libre la circulation de l'air entre le raccordement 66 au circuit 10 et la pompe 68.

L'air extrait est ensuite évacué vers l'atmosphère ou vers un volume de stockage par la conduite 70.

Bien entendu, il est à la portée de l'homme du métier de paramétrer le temps d'activation de la pompe à extraction d'air ainsi que le temps d'ouverture de la vanne pour obtenir une complète extraction de l'air, notamment en fonction de l'évolution de la différence P_{réelle}-P_{liquide} saturé.

A la fin de cette action corrective, on obtient un circuit contenant un fluide de travail débarrassé des gaz tels que l'air.

Le circuit peut alors être rendu opérationnel en offrant toutes les performances voulues.

## Revendications

1. Procédé de détection et d'extraction de fluide gazeux contenu dans un circuit fermé (10) fonctionnant selon un cycle de Rankine, ledit circuit comprenant une multiplicité de constituants avec successivement une pompe de circulation et de compression (12) d'un fluide de travail, un échangeur de chaleur (18) associé à une source chaude (24), une machine de détente (30), un échangeur de refroidissement (40), un réservoir (46) de fluide de travail et des conduites de circulation (50, 52, 54, 56, 58, 60) reliant ces constituants, **caractérisé en ce que** :
- on mesure la température (T_{réelle}) et la pression (P_{réelle}) du fluide de travail en un point du circuit lorsque ce circuit est au repos, et
- dès que la pression mesurée (P_{réelle}) dépasse une valeur seuil (P_{liquide} saturé) pour une température ambiante (T) donnée, on active un équipement d'extraction (62) du fluide gazeux pour l'évacuer hors du circuit.

2. Procédé selon la revendication 1, **caractérisé en ce que** le circuit est au repos lorsqu'aucune circulation de fluide de travail ne se produit au niveau de l'équipement d'extraction (62) et que la température mesurée correspond sensiblement à la température ambiante.

3. Procédé selon la revendication 1 ou 2, **caractérisé en ce qu'**on mesure la température (T_{réelle}) et la pression (P_{réelle}) du fluide de travail en un point bas en altitude du circuit.

4. Procédé selon la revendication 1, **caractérisé en ce qu'**on active l'équipement d'extraction de fluide gazeux (62) placé sur un point haut du circuit.

5. Procédé selon la revendication 4, **caractérisé en ce qu'**on active l'équipement d'extraction (62) en actionnant une pompe à extraction de fluide gazeux (68) et en contrôlant l'ouverture d'une vanne (72) contrôlant la circulation du fluide gazeux dans une conduite (64) reliant la pompe au circuit.

6. Procédé selon l'une des revendications précédentes, **caractérisé en ce qu'**on extrait un fluide gazeux comprenant soit de l'air, soit tout autre fluide gazeux issu de la décomposition ou de la dégradation du fluide de travail utilisé dans ledit circuit à cycle de Rankine.

7. Procédé selon l'une des revendications précédentes, **caractérisé en ce qu'**on dirige le fluide gazeux extrait vers l'extérieur du circuit.

8. Circuit fermé (10) fonctionnant selon un cycle de Rankine, le circuit fermé comprenant un dispositif de détection et d'extraction de fluide gazeux, ledit circuit comprenant une pompe de compression/circulation (12) d'un fluide de travail sous forme liquide, un échangeur de chaleur (18) balayé par une source chaude (24) pour l'évaporation dudit fluide, des moyens de détente (30) du fluide sous forme vapeur, un échangeur de refroidissement (42) balayé par une source froide pour la condensation du fluide de travail, un réservoir de fluide de travail (48), et des conduites de circulation du fluide de travail (50, 52, 54, 56, 58, 60), **caractérisé en ce que** le dispositif de détection et d'extraction de fluide gazeux comprend au moins un capteur de pression (74) et au moins un capteur de température (76) pour détecter la présence de fluide gazeux dans le circuit fermé au repos, un calculateur et un équipement d'extraction du fluide gazeux (62) hors du circuit, le circuit appliquant le procédé selon l'une des revendications précédentes.

9. Circuit fermé (10) selon la revendication 8, **caractérisé en ce que** ledit au moins un capteur de pression (74) et ledit au moins un capteur de température (76) sont associés à une table de calcul qui comprend tout ou partie d'un diagramme de Mollier.

10. Circuit fermé (10) selon la revendication 8 ou 9, **caractérisé en ce que** l'équipement d'extraction du fluide gazeux (62) comprend une pompe à extraction de fluide gazeux (68) reliée au circuit (10).

11. Circuit fermé (10) selon l'une des revendications 8 à 10, **caractérisé en ce que** l'équipement (62) comprend une conduite de fluide gazeux (64) reliant le circuit (10) à la pompe d'extraction de fluide gazeux.

12. Circuit fermé (10) selon l'une des revendications 8 à 11, **caractérisé en ce que** l'équipement (62) comprend une vanne commandée permettant de contrôler la circulation du fluide gazeux dans la conduite de fluide gazeux.

13. Circuit fermé (10) selon l'une des revendications 8 à 12, **caractérisé en ce que** l'équipement (62) comprend une conduite d'évacuation (70) vers l'extérieur du fluide gazeux.

14. Circuit fermé (10) selon l'une des revendications 8 à 13, **caractérisé en ce que** le fluide gazeux comprend soit de l'air, soit tout autre fluide gazeux issu de la décomposition ou de la dégradation du fluide de travail utilisé dans ledit circuit à cycle de Rankine.

## Patentansprüche

1. Verfahren zur Detektion und Extraktion eines gasförmigen Fluids, das in einem nach einem Rankine-Zyklus funktionierenden geschlossenen Kreislauf (10) enthalten ist, wobei der Kreislauf eine Vielzahl von Komponenten mit nacheinander einer Zirkulations- und Verdichtungspumpe (12) für ein Arbeitsfluid, einem Wärmetauscher (18), der einer heißen Quelle (24) zugeordnet ist, einer Entspannungsmaschine (30), einem Kühlungstauscher (40), einem Behälter (46) für Arbeitsfluid und diese Komponenten verbindenden Zirkulationsleitungen (50, 52, 54, 56, 58, 60) umfasst, **dadurch gekennzeichnet, dass**:
- die Temperatur (Tist) und der Druck (Pist) des Arbeitsfluids an einem Punkt des Kreislaufs gemessen werden, wenn dieser Kreislauf im Ruhezustand ist, und
- sobald der gemessene Druck (Pist) des Fluids einen Schwellenwert (P_{gesättigte} Flüssigkeit) bei einer gegebenen Umgebungstemperatur (T) überschreitet, eine Ausrüstung zur Extraktion (62) des gasförmigen Fluids aktiviert wird, um es aus dem Kreislauf abzuführen.

2. Verfahren nach Anspruch 1, **dadurch gekennzeichnet, dass** der Kreislauf im Ruhezustand ist, wenn keine Zirkulation von Arbeitsfluid auf Ebene der Ausrüstung zur Extraktion (62) stattfindet und die gemessene Temperatur im Wesentlichen der Umgebungstemperatur entspricht.

3. Verfahren nach Anspruch 1 oder 2, **dadurch gekennzeichnet, dass** die Temperatur (Tist) und der Druck (Pist) des Arbeitsfluids an einem tiefen Punkt bezogen auf die Höhe des Kreislaufs gemessen werden.

4. Verfahren nach Anspruch 1, **dadurch gekennzeichnet, dass** die Ausrüstung zur Extraktion von gasförmigem Fluid (62) aktiviert wird, die an einem hohen Punkt des Kreislaufs angeordnet ist.

5. Verfahren nach Anspruch 4, **dadurch gekennzeichnet, dass** die Ausrüstung zur Extraktion (62) aktiviert wird, indem eine Extraktionspumpe für gasförmiges Fluid (68) betätigt wird und indem das Öffnen eines Ventils (72) gesteuert wird, das die Zirkulation des gasförmigen Fluids in einer die Pumpe mit dem Kreislauf verbindenden Leitung (64) steuert.

6. Verfahren nach einem der vorhergehenden Ansprüche, **dadurch gekennzeichnet, dass** ein gasförmiges Fluid extrahiert wird, das entweder Luft umfasst oder ein anderes gasförmiges Fluid, das aus dem Zerfall oder der Zersetzung des in dem Rankine-Zyklus-Kreislauf verwendeten Arbeitsfluids hervorgegangen ist.

7. Verfahren nach einem der vorhergehenden Ansprüche, **dadurch gekennzeichnet, dass** das extrahierte gasförmige Fluid nach außerhalb des Kreislaufs geleitet wird.

8. Geschlossener Kreislauf (10), der nach einem Rankine-Zyklus funktioniert, wobei der geschlossene Kreislauf eine Vorrichtung zur Detektion und Extraktion von gasförmigem Fluid umfasst, wobei der Kreislauf eine Verdichtungs-/Zirkulationspumpe (12) für ein Arbeitsfluid in flüssiger Form, einen Wärmetauscher (18), der zur Verdampfung des Fluids von einer heißen Quelle (24) überstrichen wird, Entspannungsmittel (30) für das Fluid in Dampfform, einen Kühlungstauscher (42), der zur Kondensation des Arbeitsfluids von einer kalten Quelle überstrichen wird, einen Arbeitsfluidbehälter (48) und Zirkulationsleitungen für das Arbeitsfluid (50, 52, 54, 56, 58, 60) umfasst, **dadurch gekennzeichnet, dass** die Vorrichtung zur Detektion und Extraktion von gasförmigem Fluid mindestens einen Drucksensor (74) und mindestens einen Temperatursensor (76) zum Detektieren des Vorkommens von gasförmigem Fluid in dem geschlossenen Kreislauf im Ruhezustand, einen Rechner und eine Ausrüstung zur Extraktion des gasförmigen Fluids (62) aus dem Kreislauf umfasst, wobei der Kreislauf das Verfahren nach einem der vorhergehenden Ansprüche anwendet.

9. Geschlossener Kreislauf (10) nach Anspruch 8, **dadurch gekennzeichnet, dass** der mindestens eine Drucksensor (74) und der mindestens eine Temperatursensor (76) einer Berechnungstabelle zugeordnet sind, die das gesamte oder einen Teil eines Mollier-Diagramms umfasst.

10. Geschlossener Kreislauf (10) nach Anspruch 8 oder 9, **dadurch gekennzeichnet, dass** die Ausrüstung zur Extraktion des gasförmigen Fluids (62) eine Extraktionspumpe für gasförmiges Fluid (68) umfasst, die mit dem Kreislauf (10) verbunden ist.

11. Geschlossener Kreislauf (10) nach einem der Ansprüche 8 bis 10, **dadurch gekennzeichnet, dass** die Ausrüstung (62) eine Leitung für gasförmiges Fluid (64) umfasst, die den Kreislauf (10) mit der Extraktionspumpe für gasförmiges Fluid verbindet.

12. Geschlossener Kreislauf (10) nach einem der Ansprüche 8 bis 11, **dadurch gekennzeichnet, dass** die Ausrüstung (62) ein angesteuertes Ventil umfasst, das es ermöglicht, die Zirkulation des gasförmigen Fluids in der Leitung für gasförmiges Fluid zu steuern.

13. Geschlossener Kreislauf (10) nach einem der Ansprüche 8 bis 12, **dadurch gekennzeichnet, dass** die Ausrüstung (62) eine Abführungsleitung (70) zum Abführen des gasförmigen Fluid nach außen umfasst.

14. Geschlossener Kreislauf (10) nach einem der Ansprüche 8 bis 13, **dadurch gekennzeichnet, dass** das gasförmige Fluid entweder Luft umfasst oder ein anderes gasförmiges Fluid, das aus der Zersetzung oder dem Zerfall des in dem Rankine-Zyklus-Kreislauf verwendeten Arbeitsfluids hervorgegangen ist.

## Claims

1. Method for detecting and extracting gaseous fluid contained in a closed circuit (10) functioning according to a Rankine cycle, said circuit comprising a multiplicity of components with, in succession, a working fluid circulation and compression pump (12), a heat exchanger (18) associated with a hot source (24), an expansion machine (30), a cooling exchanger (40), a tank (46) of working fluid and circulation ducts (50, 52, 54, 56, 58, 60) linking these components, **characterized in that**:
- the temperature (Tᵣₑₐₗ) and the pressure (Pᵣₑₐₗ) of the working fluid are measured at a point of the circuit when this circuit is at rest, and
- as soon as the measured pressure (Pᵣₑₐₗ) exceeds a threshold value (P_{saturated} liquid) for a given ambient temperature (T), a gaseous fluid extraction device (62) is activated to discharge the gaseous fluid out of the circuit.

2. Method according to Claim 1, **characterized in that** the circuit is at rest when no circulation of working fluid occurs at the extraction device (62) and the measured temperature corresponds substantially to the ambient temperature.

3. Method according to Claim 1 or 2, **characterized in that** the temperature (Tᵣₑₐₗ) and the pressure (Pᵣₑₐₗ) of the working fluid are measured at a low altitude point of the circuit.

4. Method according to Claim 1, **characterized in that** the gaseous fluid extraction device (62) placed on a high point of the circuit is activated.

5. Method according to Claim 4, **characterized in that** the extraction device (62) is activated by actuating a gaseous fluid extraction pump (68) and by controlling the opening of a valve (72) controlling the circulation of the gaseous fluid in a duct (64) linking the pump to the circuit.

6. Method according to one of the preceding claims, **characterized in that** a gaseous fluid comprising either air, or any other gaseous fluid deriving from the breakdown or the degradation of the working fluid used in said Rankine cycle circuit is extracted.

7. Method according to one of the preceding claims, **characterized in that** the extracted gaseous fluid is directed to the outside of the circuit.

8. Closed circuit (10) functioning according to a Rankine cycle, the closed circuit comprising a gaseous fluid detection and extraction device, said circuit comprising a compression/circulation pump (12) for a working fluid in liquid form, a heat exchanger (18) swept by a hot source (24) for the evaporation of said fluid, expansion means (30) for the fluid in vapour form, a cooling exchanger (42) swept by a cold source for the condensation of the working fluid, a tank of working fluid (48), and working fluid circulation ducts (50, 52, 54, 56, 58, 60), **characterized in that** the gaseous fluid detection and extraction device comprises at least one pressure sensor (74) and at least one temperature sensor (76) for detecting the presence of gaseous fluid in the closed circuit when at rest, a computer and a gaseous fluid extraction device (62) for extracting the gaseous fluid out of the circuit, the circuit applying the method according to one of the preceding claims.

9. Closed circuit (10) according to Claim 8, **characterized in that** said at least one pressure sensor (74) and said at least one temperature sensor (76) are associated with a calculation table which comprises all or part of a Mollier diagram.

10. Closed circuit (10) according to Claim 8 or 9, **characterized in that** the gaseous fluid extraction device (62) comprises a gaseous fluid extraction pump (68) linked to the circuit (10).

11. Closed circuit (10) according to one of Claims 8 to 10, **characterized in that** the device (62) comprises a gaseous fluid duct (64) linking the circuit (10) to the gaseous fluid extraction pump.

12. Closed circuit (10) according to one of Claims 8 to 11, **characterized in that** the device (62) comprises a controlled valve making it possible to control the circulation of the gaseous fluid in the gaseous fluid duct.

13. Closed circuit (10) according to one of Claims 8 to 12, **characterized in that** the device (62) comprises a discharge duct (70) to the outside for the gaseous fluid.

14. Closed circuit (10) according to one of Claims 8 to 13, **characterized in that** the gaseous fluid comprises either air, or any other gaseous fluid deriving from the breakdown or the degradation of the working fluid used in said Rankine cycle circuit.
